# DEMANDE DE BREVET EUROPEEN

(11) **EP 1 433 637 A1**
(43) Date de publication de la demande: **30.06.2004**
(21) Numéro de dépôt: 03364044.2
(22) Date de dépôt: 23.12.2003
(51) Int. Cl.: B60J 7/00, B60J 7/06, B60J 3/02

(54) **Dispositif d'occultation pour véhicule automobile, à déploiement/repliement modulable de la toile, et véhicule correspondant**

(30) Priorité: 24.12.2002 FR 0216668
(71) Demandeur: WAGON AUTOMOTIVE SNC, 79302 Bressuire Cédex (FR)
(72) Inventeur: Cousson, Francois, 79430 La Chapelle Saint Laurent (FR)
(74) Mandataire: Bioret, Ludovic

(57) **Abrégé**

L'invention a pour objet un dispositif d'occultation mettant en oeuvre une toile d'occultation (1) pouvant être repliée ou déployée selon un axe de déploiement, en fonction des besoins, comprenant des moyens pour modifier la position selon ledit axe de déploiement de chacune des deux extrémités de la portion déployée de ladite toile. Il peut notamment comprendre deux tubes d'enroulement (2, 3), associés respectivement à chaque extrémité de la toile, et dont le déplacement peut être motorisé.

## Description

Le domaine de l'invention est celui de l'occultation de surfaces vitrées ou d'ouvertures dans les véhicules automobiles. Plus précisément, l'invention concerne les dispositifs mettant en oeuvre une toile d'occultation mobile susceptible d'être repliée ou déployée en fonction des besoins, par exemple pour le pavillon vitré d'un véhicule.

De façon assez répandue, les toits des véhicules automobiles sont pourvus d'une baie et/ou d'une ouverture vitrée. Diverses solutions ont été proposées pour limiter le passage des rayons du soleil, notamment en utilisant des stores, ou encore des vitres teintées ou motif filtrant rapporté sur la vitre par exemple par sérigraphie.

Parallèlement, la tendance actuelle est de proposer des véhicules automobiles présentant de plus en plus de surfaces vitrées. On cherche ainsi à augmenter la surface vitrée des portières latérales, des pare-brises et des lunettes arrière, et également des pavillons. On propose ainsi des véhicules à pavillon intégralement, ou à tout le moins en grande partie, vitrée.

Les objectifs de cette tendance sont notamment d'offrir :
- une meilleure visibilité pour les occupants du véhicule ;
- une luminosité accrue à l'intérieur du véhicule ;
- une sensation d'espace élargi pour les occupants ;
- une amélioration de l'esthétique générale du véhicule ;
- ...

On comprend aisément qu'il est alors nécessaire de prévoir des moyens d'occultation, pour protéger de tels habitacles, et leurs occupants, du soleil.

De tels moyens d'occultation sont déjà proposés, pour être déployés en regard des pavillons vitrés. Des stores à enrouleur, comprenant classiquement une toile mobile entre une position déployée et une position repliée, de même que ceux utilisés pour les vitres latérales ou les lunettes arrières, ont ainsi été transposés et/ou perfectionnés en vue d'être adaptés aux pavillons vitrés.

Selon cette approche classique, la toile peut être déployée en position d'occultation en étant tirée, à partir du tube d'enroulement, de l'arrière du véhicule vers l'avant.

Dans certains cas, plusieurs positions de déploiement intermédiaire de la toile peuvent être prévues. En effet, il n'est pas toujours nécessaire, ou souhaitable, que la toile soit intégralement déployée. On peut par exemple souhaiter protéger les places arrière, occupées par des enfants, et conserver le soleil sur les places avant.

Toutefois, ces stores ne sont pas d'une grande modularité. En effet, la structure et le fonctionnement de ces stores sont essentiellement prévus pour satisfaire les besoins du conducteur et/ou du passager avant du véhicule. En d'autres termes, ces stores ne peuvent satisfaire toutes les combinaisons de demandes exprimées par le conducteur et/ou le passager avant et par le ou les passagers arrières. Il n'est par exemple pas possible, dans le cas du montage mentionné précédemment, d'occulter la partie avant du pavillon tout en laissant passer les rayons du soleil en partie arrière du pavillon.

On peut bien sûr envisager d'inverser le montage, mais cela ne fait qu'inverser le problème, sans offrir plus de modularité.

Une solution permettant d'obtenir une bonne modularité serait de multiplier le nombre de stores, couvrant chacun une petite surface. Mais cette solution serait coûteuse, complexe à monter et à mettre en oeuvre, présenterait un poids important, et serait plus généralement inadapté aux pavillons vitrés, pour lesquels une vue dégagée est souhaitée lorsque les stores ne sont pas déployés, sur les plans technique, ergonomique et esthétique.

L'invention a notamment pour objectif de pallier cet inconvénient de l'art antérieur.

Plus précisément, l'invention a pour objectif de proposer un dispositif d'occultation adapté au pavillon d'un véhicule, qui soit d'une grande modularité, sans nécessiter une pluralité de stores.

En d'autres termes, l'invention a pour objectif de fournir un tel dispositif d'occultation qui permette de satisfaire les attentes (en luminosité ou en protection vis-à-vis du soleil) de chacun des occupants tant à l'avant qu'à l'arrière du véhicule.

L'invention a également pour objectif de fournir un tel dispositif d'occultation qui soit simple de conception et facile à mettre en oeuvre.

Ces objectifs ainsi que d'autres qui apparaîtront par la suite sont atteints grâce à l'invention qui a pour objet un dispositif d'occultation pour véhicule automobile, mettant en oeuvre une toile d'occultation pouvant être repliée ou déployée selon un axe de déploiement, en fonction des besoins, et comprenant des moyens pour modifier la position selon ledit axe de déploiement de chacune des deux extrémités de la portion déployée de ladite toile, et maintenir ladite toile tendue sensiblement parallèlement à la surface qu'elle occulte.

Ainsi, le dispositif d'occultation selon l'invention offre une modularité bien supérieure par rapport aux solutions de l'art antérieur, à l'aide d'une seule toile. En effet, à l'aide d'un tel dispositif d'occultation, des positions multiples de la toile peuvent être envisagées, et notamment :
- une position d'occultation totale ;
- une position d'ouverture totale ;
- une position d'ouverture en partie avant du pavillon du véhicule, la partie arrière étant occultée ;
- une position d'ouverture en partie arrière du pavillon du véhicule, la partie avant étant occultée ;
- une position d'occultation partielle d'une partie centrale.

Dans tous les cas, la largeur de la partie occultée et de la partie ou des parties, non occultées peut être variable, et adaptée aux besoins.

On obtient donc un dispositif selon lequel l'occultation de la partie avant du pavillon (dans l'hypothèse selon laquelle un tube enrouleur est monté en arrière du pavillon) ne contraint pas les occupants arrière d'occulter la partie du pavillon se trouvant au-dessus de leur place. Au contraire, ils sont libres de libérer la surface vitrée du pavillon en sa partie arrière, que la toile soit repliée ou pas par rapport à la partie avant du pavillon.

Le même principe peut être adapté à d'autres applications dans le véhicule, par exemple pour les vitres latérales ou de hayons, les cache-bagages, etc.

Selon une approche préférentielle de l'invention, chacune desdites extrémités est associée à des moyens de stockage d'au moins une partie de ladite toile, lesdits moyens de stockage étant mobiles en translation selon l'axe de déploiement de ladite toile.

Avantageusement, au moins un desdits moyens de stockage comprend un tube d'enroulement de ladite toile.

De façon préférentielle, chacun desdits moyens de stockage comprend un tube d'enroulement de ladite toile. Ainsi, la toile est répartie sur deux tubes, ce qui permet en outre de répartir l'encombrement de la toile repliée, et facilite le logement de celle-ci, en particulier au niveau d'un pavillon.

Selon une caractéristique avantageuse, au moins un desdits tubes d'enroulement comprend des moyens de rappel tendant à ramener la dite toile dans une position enroulée.

La toile est ainsi toujours tendue. Des moyens de motorisation peuvent également assurer une fonction similaire.

Dans un mode de réalisation préférentiel de l'invention, le déplacement desdits moyens de stockage est motorisé. On peut notamment prévoir un moto-réducteur monté dans chacun desdits tubes d'enroulement.

De façon avantageuse, lesdits moyens de stockage sont munis à au moins une de leurs extrémités d'une roue dentée coopérant avec une crémaillère solidaire dudit véhicule.

Bien sûr d'autres moyens peuvent être prévus, par exemple à base de rails dans lesquels coulissent un patin équiper de moyens de blocage dans une position souhaitée. De même, on peut prévoir que le déplacement des moyens de stockage s'effectue manuellement.

Dans un autre mode de réalisation de l'invention, on peut également prévoir que l'une desdites extrémités de la portion déployée de ladite toile est associée à une barre de tirage et l'autre desdites extrémités à des moyens de stockage de ladite toile, ladite barre de tirage et lesdits moyens de stockage étant mobiles en translation selon l'axe de déploiement de ladite toile.

L'invention concerne également les véhicules comprenant au moins un dispositif d'occultation tel que décrit précédemment.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue schématique en perspective d'un dispositif d'occultation selon l'invention ;
- la figure 2 est une vue schématique de côté d'un dispositif d'occultation selon l'invention.

Comme indiqué précédemment, l'invention propose de rendre mobile, le long du pavillon, chacune des extrémités de la portion déployée de la toile d'occultation, en vue de permettre toute une déclinaison de positions intermédiaires de la toile d'avant en arrière du pavillon. En d'autres termes, l'invention propose un store, notamment pour un pavillon, dont on peut régler la position de chaque extrémité de la toile déployée, et donc la largeur, le début et la fin de la partie déployée, cela permet d'adapter de façon précise et efficace la partie occultée et la partie non couverte, et par exemple de laisser le soleil passer au dessus des places arrière, de protéger du soleil la tête des personnes assises aux places avant, puis laisser ensuite à nouveau le soleil passer au niveau de la planche de bord.

La toile est maintenu tendue entre les deux extrémités, quelles que soient sa position et la longueur dépliée, sensiblement parallèlement au plan de l'ouverture ou la baie (par exemple le pavillon) à occulter.

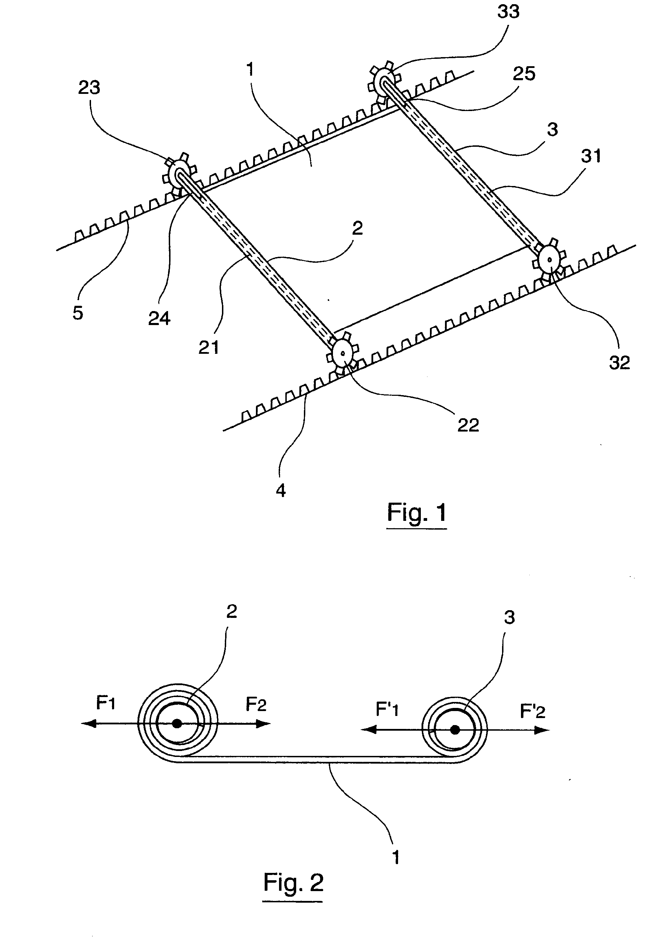

En référence aux figures 1 et 2, chacune des extrémités de la toile 1 du dispositif d'occultation selon l'invention est relié à des moyens d'entraînement motorisés susceptibles de se déplacer le long du pavillon, de façon à déplacer indépendamment l'une de l'autre les extrémités de la portion de la toile déployée. Ces déplacements sont illustrés par les flèches F1, F2 et F'1, F'2 sur la figure 2.

Selon le présent mode de réalisation, les extrémités de la toile sont chacune solidaires d'un tube d'enroulement 2, 3 monté sur des moyens supports, en l'occurrence respectivement deux axes 21, 31 portant à chacune de leurs extrémités une roue dentée, respectivement 22, 23 et 32, 33.

Ces roues dentées 22, 23, 32, 33 sont destinées à coopérer avec des crémaillères 4, 5 s'étendant le long du pavillon en vue de supporter et guider les tubes d'enroulement 2, 3 et par conséquent les extrémités de la toile 1 le long de crémaillères.

Bien sûr, d'autres moyens peuvent être prévus pour le guidage, par exemple à base de roulettes, de patins, de moyens de blocage dans la position souhaitée, pour ce faire, chacun des tubes d'enroulement 2, 3 intègre des moyens de motorisation, constitués, en l'occurrence par des moto-réducteurs 24, 25.

Ces moyens de motorisation peuvent également être montés sur la crémaillère, ou à proximité de celle-ci. Il est cependant avantageux et pratique, en terme d'encombrement notamment, de les loger dans le tube d'enroulement.

En référence à la figure 2, on comprend que le dispositif selon l'invention permet de déplacer les extrémités de la toile 1 selon de nombreuses possibilités, et notamment :
- en déplaçant les tubes d'enroulement 2, 3 dans une même direction (selon les flèches F1, F' 1 ou F2, F'2), la toile n'étant pas totalement déployée ;
- en déplaçant les tubes d'enroulement 2, 3 dans des directions opposées pour augmenter la surface déployée de la toile (selon les flèches F1, F'2) ou pour la diminuer (selon les flèches F2, F' 1) ;
- en déplaçant un des tubes d'enroulement, l'autre étant maintenu fixe, de façon à augmenter ou diminuer l'occultation du pavillon par rapport seulement à une des parties avant ou arrière du pavillon ;
- ...

Chacun des tubes d'enroulement comprend des moyens de rappel, ou des moyens de motorisation assurant une fonction similaire, tendant à replier la toile, de façon que cette dernière soit toujours tendue.

Préférentiellement, ces moyens de rappel présentent la même tension, pour répartir de façon équilibrée la portion de toile repliée.

On notera un autre avantage important de l'invention, à savoir le fait que le toile repliée est répartie sur deux tubes d'enroulement, ce qui permet de réduire l'épaisseur de la toile, lorsqu'elle est repliée .

Cela est notamment intéressant pour les stores de pavillon, pour lesquels on ne dispose pas de beaucoup d'épaisseur pour le stockage.

On notera que d'autres modes de réalisation de l'invention sont envisageables sans sortir du cadre de l'invention, notamment en prévoyant un seul tube d'enroulement et une barre de tirage de la toile, tous deux couplés à des moyens d'entraînement motorisés. Dans ce cas, des moyens peuvent être prévus pour rendre le tube d'enroulement débrayable des moyens d'entraînement de façon à permettre l'enroulement ou le déroulement de la toile sans déplacement du tube, ceci lors d'un déplacement de la barre de tirage.

Il est également possible que le système de l'invention ne soit pas motorisé, ou seulement partiellement motorisé. Dans ce cas, on peut prévoir des moyens permettant le coulissement des tubes d'enroulement (or de la barre de tirage) dans deux rails, et des moyens de blocage, verrouillant chaque tube dans la position souhaitée.

On note également que la modularité du dispositif peut encore être augmentée en prévoyant deux store d'occultation indépendants, l'un monté côté conducteur, l'autre monté côté passager avant, en cas de besoin. Dans ce cas, on prévoit de rapporter au niveau du pavillon du véhicule deux crémaillères latérales et une crémaillère centrale (parallèle aux crémaillères latérales), de façon à définir deux chemins de guidage pour les roues dentées de chacun des stores.

## Revendications

1. Dispositif d'occultation pour véhicule automobile, mettant en oeuvre une toile d'occultation (1) pouvant être repliée ou déployée selon un axe de déploiement, en fonction des besoins,
**caractérisé en ce qu'**il comprend des moyens (22, 23, 32, 33, 4, 5) pour modifier la position selon ledit axe de déploiement de chacune des deux extrémités de la portion déployée de ladite toile (1), et maintenir ladite toile (1) tendue sensiblement parallèlement à la surface qu'elle occulte.

2. Dispositif d'occultation selon la revendication 1, **caractérisé en ce que** chacune desdites extrémités est associée à des moyens de stockage (2, 3) d'au moins une partie de ladite toile, lesdits moyens de stockage (2, 3) étant mobiles en translation selon l'axe de déploiement de ladite toile.

3. Dispositif d'occultation selon la revendication 2, **caractérisé en ce qu'**au moins un desdits moyens de stockage (2, 3) comprend un tube d'enroulement de ladite toile.

4. Dispositif d'occultation selon la revendication 3, **caractérisé en ce que** chacun desdits moyens de stockage (2, 3) comprend un tube d'enroulement de ladite toile.

5. Dispositif d'occultation selon l'une quelconque des revendications 3 et 4, **caractérisé en ce qu'**au moins un desdits tubes d'enroulement (2, 3) comprend des moyens de rappel tendant à ramener la dite toile dans une position enroulée.

6. Dispositif d'occultation selon l'une quelconque des revendications 2 à 5, **caractérisé en ce que** le déplacement desdits moyens de stockage (2, 3) est motorisé.

7. Dispositif d'occultation selon la revendication 6 et l'une quelconque des revendications 3 à 5, **caractérisé en ce qu'**il comprend un moto-réducteur (24, 25) monté dans chacun desdits tubes d'enroulement (2, 3).

8. Dispositif d'occultation selon l'une quelconque des revendications 2 à 7, **caractérisé en ce que** lesdits moyens de stockage (2, 3) sont munis à au moins une de leurs extrémités d'une roue dentée (22, 23, 32, 33) coopérant avec une crémaillère (4, 5) solidaire dudit véhicule.

9. Dispositif d'occultation selon la revendication 1, **caractérisé en ce qu'**en l'une desdites extrémités de la portion déployée de ladite toile est associée à une barre de tirage et l'autre desdites extrémités à des moyens de stockage de ladite toile, ladite barre de tirage et lesdits moyens de stockage étant mobiles en translation selon l'axe de déploiement de ladite toile.

10. Véhicule automobile **caractérisé en ce qu'**il comprend au moins un dispositif d'occultation mettant en oeuvre une toile d'occultation (1) pouvant être repliée ou déployée selon un axe de déploiement, en fonction des besoins, **caractérisé en ce que** ledit dispositif d'occultation comprend des moyens (4, 5, 22, 23, 32, 330) pour modifier la position selon ledit axe de déploiement de chacune des deux extrémités de la portion déployée de ladite toile, et maintenir ladite toile (1) tendue sensiblement parallèlement à la surface qu'elle occulte.
